# EUROPEAN PATENT APPLICATION

(11) **EP 4 800 756 A1**
(43) Date of publication of application: **02.09.2026**
(21) Application number: 24882705.7
(22) Date of filing: 08.10.2024
(51) Int. Cl.: H01M 4/36, H01M 4/587, H01M 4/133, H01M 10/052, C01B 32/205, H01M 4/02

(54) **ANODE ACTIVE MATERIAL FOR LITHIUM SECONDARY BATTERY, METHOD FOR MANUFACTURING SAME, AND LITHIUM SECONDARY BATTERY COMPRISING SAME**

(30) Priority: 27.10.2023 KR 20230145581; 27.10.2023 KR 20230145582
(71) Applicant: Posco Future M Co., Ltd., Pohang-si, Gyeongsangbuk-do 37918 (KR)
(72) Inventor: KIM, Dae Sik, Pohang-si, Gyeongsangbuk-do 37918 (KR); KWON, Sung Sang, Pohang-si, Gyeongsangbuk-do 37918 (KR); KIM, Ga Eun, Pohang-si, Gyeongsangbuk-do 37918 (KR); YEON, Seon Young, Pohang-si, Gyeongsangbuk-do 37918 (KR); JANG, Yeonghun, Pohang-si, Gyeongsangbuk-do 37918 (KR)
(74) Representative: Pfenning, Meinig & Partner mbB
(86) International application number: PCT/KR2024/015324
(87) International publication number: WO 2025/089677

(57) **Abstract**

The present embodiments relate to a negative electrode active material for a lithium secondary battery, a method for manufacturing the same, and a lithium secondary battery comprising the same. The negative electrode active material of the present invention comprises coarse carbon particles and fine carbon particles, and satisfies Equation 1 below. $0.45 \leq Tap Density \left(g/cc\right) / BET Specific Surface Area \left({m}^{2}/g\right) \leq 0.72$

(In Equation 1, the Tap Density and the BET Specific Surface Area mean the tap density and BET specific surface area of the negative electrode active material).

## Description

### [TECHNICAL FIELD]

The present embodiments relate to a lithium secondary battery, and more particularly, to a negative electrode active material for a lithium secondary battery, a method for manufacturing the same, and a lithium secondary battery comprising the same.

### [BACKGROUND ART]

Social interest in the depletion of fossil fuels and environmental pollution caused by the use of fossil fuels is increasing, and as a measure to solve this, eco-friendly energy sources are attracting attention. Among the eco-friendly energy sources, interest in electrical energy is increasing, and in particular, lithium secondary batteries are attracting attention.

The application range of lithium secondary batteries is expanding not only to small electronic devices and portable IT devices but also to electric vehicles and energy storage systems. With the expansion of the application range of lithium secondary batteries, the development of new materials for high capacity and high output is becoming important. Among the components of the lithium secondary battery, the negative electrode material plays a role in storing lithium ions and is a factor related to the capacity and lifespan of the lithium secondary battery.

Various types of carbon-based materials including artificial graphite, natural graphite, and hard carbon, capable of intercalating/deintercalating lithium, have been applied as the negative electrode material. Graphite provides an advantage in terms of energy density of a lithium secondary battery because its discharge voltage relative to lithium is as low as 0.2 V, and a battery using the graphite as a negative electrode active material exhibits a high discharge voltage of 3.6 V. In addition, it guarantees the long life of the lithium secondary battery due to excellent reversibility, and thus is most widely used.

In the case of the natural graphite, it has an advantage of excellent utility as a negative electrode material because it is low-priced and exhibits electrochemical characteristics similar to artificial graphite. However, natural graphite possesses a plate-like shape, so it has a large surface area and the edge portion is exposed as it is, causing a problem that penetration or decomposition reaction of an electrolyte occurs when applied as a negative electrode active material. For this reason, the edge portion is exfoliated or destroyed, causing a significant irreversible reaction, and when manufacturing an electrode pole plate using the same, the graphite active material is compressed and oriented flatly on a current collector, making impregnation of the electrolyte difficult, which may degrade charge/discharge characteristics.

To solve this, efforts are being made to transform natural graphite into a smooth surface shape through post-processing such as a spheronization process to reduce irreversible reactions and improve electrode processability. The graphite commercialized as the negative electrode material shows excellent lifespan characteristics and high theoretical capacity because the change in crystal structure is small during intercalation and deintercalation of lithium ions, and oxidation and reduction reactions occur continuously. However, since the graphite can accommodate only one lithium ion per six carbon atoms, there is a limit to securing a limited theoretical capacity, for example, about 372 mAh/g, and meeting the requirements for high output and high capacity.

In addition, the mobility of lithium ions is generally very low in diffusion speed within a solid compared to the diffusion speed in an electrolyte. At this time, in order to increase the mobility of the lithium ions, the smaller the particle size, the shorter the solid diffusion distance, which is advantageous in charging, specifically rapid charging.

As such, research on ways to utilize fine powder products with small particle sizes is continuing.

### [DETAILED DESCRIPTION OF THE INVENTION]

### [TECHNICAL PROBLEM]

A technical problem to be solved by the present invention is to provide a negative electrode active material that has high lithium ion mobility during charging and discharging of a lithium secondary battery, which is advantageous for rapid charging characteristics, reduces costs by utilizing waste fine powder products with small particle sizes, and has excellent orientation characteristics and output characteristics.

Another technical problem to be solved by the present invention is to provide a method for manufacturing a negative electrode active material having the above advantages.

Still another technical problem to be solved by the present invention is to provide a lithium secondary battery comprising a negative electrode active material having the above advantages.

### [TECHNICAL SOLUTION]

According to an embodiment of the present invention, a negative electrode active material for a lithium secondary battery comprises coarse carbon particles and fine carbon particles, and may satisfy Equation 1 below.$0.45 \leq Tap Density \left(g/cc\right) / BET Specific Surface Area \left({m}^{2}/g\right) \leq 0.72$

According to another embodiment of the present invention, a lithium secondary battery may include the aforementioned negative electrode for a lithium secondary battery, a positive electrode comprising a positive electrode active material, and an electrolyte.

According to still another embodiment of the present invention, a method for manufacturing a negative electrode active material may comprise preparing at least one coarse carbon particle having an average particle diameter (D₅₀) of 8 to 15 µm and at least one fine carbon particle having an average particle diameter (D₅₀) of 7 µm or less; granulating and carbonizing the coarse carbon particles and the fine carbon particles; graphitizing the carbonized granulated product; and coating the graphitized product, wherein the step of granulating and carbonizing the coarse carbon particles and the fine carbon particles may include mixing the fine carbon particles in an amount of 5 to 30% by weight based on the total amount of the coarse carbon particles and the fine carbon particles.

### ADVANTAGEOUS EFFECTS

According to an embodiment of the present invention, by providing a negative electrode active material for a lithium secondary battery simultaneously containing fine particles and coarse particles, it is possible to provide a negative electrode active material that has high lithium ion mobility during charging and discharging of a lithium secondary battery, which is advantageous for rapid charging characteristics, reduces costs by utilizing waste fine powder products with small particle sizes, and has excellent orientation characteristics and output characteristics.

A lithium secondary battery according to another embodiment of the present invention can provide a lithium secondary battery applicable to rapid charging by including the aforementioned negative electrode active material.

A method for manufacturing a negative electrode active material for a lithium secondary battery according to still another embodiment of the present invention can provide a method for manufacturing a negative electrode active material for a lithium secondary battery having the aforementioned advantages.

### BRIEF DESCRIPTION OF THE DRAWINGS

FIG. 1 illustrates a negative electrode active material for a lithium secondary battery according to an embodiment of the present invention.
FIG. 2 illustrates a negative electrode active material for a lithium secondary battery according to another embodiment of the present invention.
FIG. 3 is a flowchart regarding a method for manufacturing a negative electrode active material according to an embodiment of the present invention.
FIGS. 4a to 4c are 1,000x magnification texture photographs of the negative electrode active materials of Comparative Example 1, Example 1, and Example 2, respectively.
FIGS. 5a to 5c are 5,000x magnification texture photographs of the negative electrode active materials for a lithium secondary battery according to Examples of the present invention and a Comparative Example.
FIGS. 6a to 7c are texture photographs of negative electrode active materials for a lithium secondary battery according to Examples of the present invention and Comparative Examples.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Therefore, a first part, component, region, layer, or section described below may be referred to as a second part, component, region, layer, or section without departing from the scope of the present invention.

The terminology used herein is for the purpose of referring to specific embodiments only and is not intended to limit the present invention. The singular forms used herein include plural forms unless the phrases clearly indicate the opposite meaning. The meaning of "comprising" used in the specification specifies specific characteristics, regions, integers, steps, operations, elements, and/or components, and does not exclude the presence or addition of other characteristics, regions, integers, steps, operations, elements, and/or components.

When a part is referred to as being "on" or "above" another part, it may be directly on or above the other part, or another part may be involved therebetween. In contrast, when a part is referred to as being "directly on" another part, no other part is interposed therebetween.

Unless defined otherwise, all terms including technical and scientific terms used herein have the same meaning as commonly understood by one of ordinary skill in the art to which the present invention belongs. Terms defined in commonly used dictionaries are further interpreted as having meanings consistent with the relevant technical literature and the currently disclosed content, and are not interpreted in an idealized or very formal sense unless defined.

Hereinafter, embodiments of the present invention will be described in detail. However, these are presented as examples, and the present invention is not limited thereby, and the present invention is only defined by the scope of the claims to be described later.

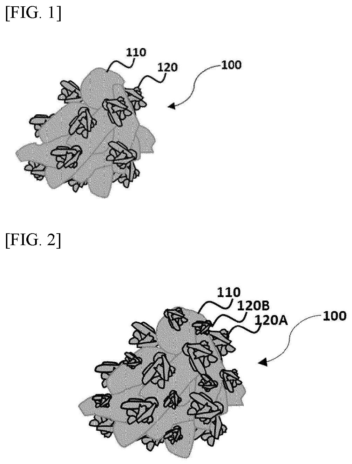

FIG. 1 illustrates a negative electrode active material 100 for a lithium secondary battery according to an embodiment of the present invention.

Referring to FIG. 1, the negative electrode active material 100 for a lithium secondary battery may include at least one coarse carbon particle 110 and at least one fine carbon particle 120. The coarse carbon particle 110 may be a carbon particle having a larger diameter than the fine carbon particle 120.

In one embodiment, the coarse carbon particle 110 and the fine carbon particle 120 may be artificial graphite, natural graphite, or a combination thereof. Specifically, the coarse carbon particle 110 and the fine carbon particle 120 may be artificial graphite.

In one embodiment, the coarse carbon particle 110 and the fine carbon particle 120 may be in the form of amorphous, flake, angular, plate, spherical, fibrous, point, or a combination thereof. In one embodiment, the coarse carbon particle 110 and the fine carbon particle 120 may originate from coal-based needle calcined coke, needle green coke, isotropic calcined coke, isotropic green coke, petroleum-based needle calcined coke, needle green coke, regular calcined coke, regular green coke, or a combination thereof. Specifically, the coarse carbon particle 110 and the fine carbon particle 120 may originate from Green coke (raw coke). More specifically, the fine carbon particle 120 may be a product of waste fine powder. By mixing the product of waste fine powder with the coarse carbon particles, there is an advantage that cost reduction is possible.

The green coke refers to manufacturing pitch, which is a coal-based or petroleum-based residue or processed product, through a coking reaction under high pressure and high temperature conditions. Specifically, depending on the composition of the raw material and the coking process conditions, anisotropic or needle coke with high carbonaceous texture orientation in a uniaxial direction or isotropic or pitch coke with low carbonaceous texture orientation is obtained. Specifically, green means a state obtained immediately after the coking process and containing a certain fraction of volatile matter without undergoing heat treatment such as Calcination or Carbonization.

In one embodiment, the green coke may include needle coke, isotropic coke, pitch coke, or a combination thereof. When the green coke is used, a negative electrode active material for a lithium secondary battery having a low expansion rate and excellent high-speed charge and discharge characteristics can be provided. In addition, when the green coke is used, a separate heat treatment process is not performed to remove volatile matter unlike calcined coke, so price competitiveness may be excellent.

FIG. 2 illustrates a negative electrode active material 100 for a lithium secondary battery according to another embodiment of the present invention.

Referring to FIG. 2, the negative electrode active material 100 for a lithium secondary battery may include at least one coarse carbon particle 110 and at least one fine carbon particle 120A, 120B. The coarse carbon particle 110 may be a carbon particle having a larger diameter than the fine carbon particle 120.

In one embodiment, the coarse carbon particle 110 and the fine carbon particles 120A, 120B may be artificial graphite, natural graphite, or a combination thereof. Specifically, the coarse carbon particle 110 and the fine carbon particles 120A, 120B may be artificial graphite.

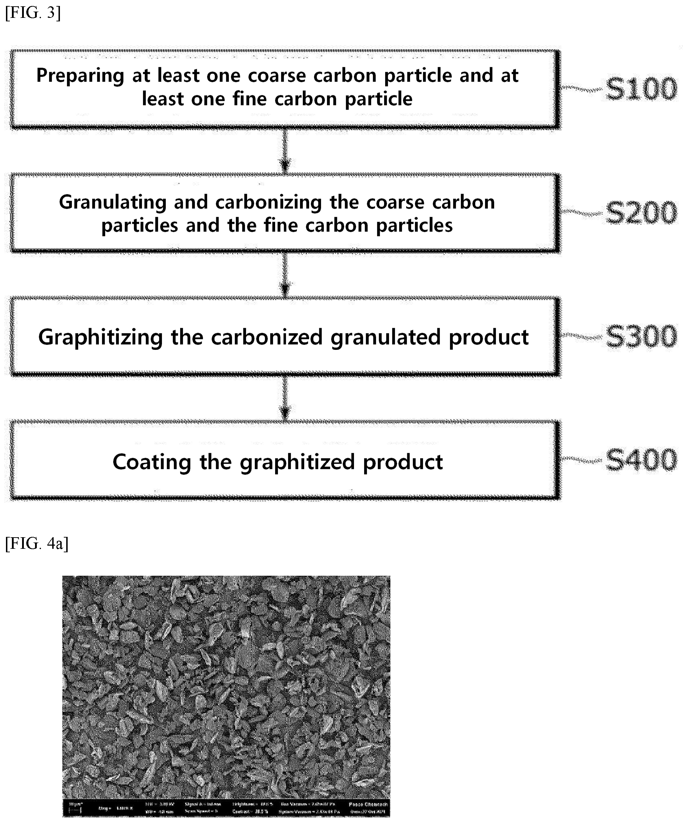

The coarse carbon particle 110 and the fine carbon particles 120, 120A, 120B refer to a state in which the coarse carbon particles and fine carbon particles described later in FIG. 3 are mixed and graphitized together, and coated with a coating material such as pitch, and the content regarding the green coke may be referred to in the coarse carbon particles and fine carbon particles described later.

Referring back to FIGS. 1 and 2, in one embodiment, the coarse carbon particle 110 may have an average particle diameter in the range of 8 to 15 µm. Specifically, the coarse carbon particle 110 may have an average particle diameter in the range of 8 to 12 µm, more specifically in the range of 9 to 11 µm.

If the particle diameter range of the coarse carbon particle 110 exceeds the upper limit of the above range, there is a problem that efficiency characteristics and output characteristics are degraded. If the particle diameter range of the coarse carbon particle 110 falls below the lower limit of the above range, the effect of improving electrochemical characteristics by mixing fine carbon particles is not expressed, the specific surface area increases, the tap density decreases, and there may be a problem of an increase in the electrode expansion rate.

In one embodiment, the fine carbon particle 120 may have an average particle diameter of less than 7 µm. Specifically, the fine carbon particle 120 may have an average particle diameter of 3 to 7 µm, more specifically, 4 to 6 µm.

If the particle diameter range of the fine carbon particle 120 exceeds the upper limit of the above range, there is a problem that it is not uniformly distributed between the coarse carbon particles 110, so the effect of mixing is not expressed. If the particle diameter range of the fine carbon particle 120 falls below the lower limit of the above range, the charge/discharge capacity decreases, the specific surface area increases, the tap density decreases, and there is a problem that the electrode expansion rate increases.

In this way, as the coarse carbon particles 110 and the fine carbon particles 120 satisfy the above particle diameter ranges, the fine carbon particles 120 can be uniformly distributed between the coarse carbon particles 110, and a negative electrode active material with improved orientation characteristics and excellent output characteristics can be provided.

Specifically, the first fine carbon particle 120A may have an average particle diameter of 3 to 7 µm. More specifically, the first fine carbon particle 120A may have an average particle diameter of 4 to 6 µm.

If the particle diameter range of the first fine carbon particle 120A exceeds the upper limit of the above range, there is a problem that it is difficult to apply to rapid charging. If the particle diameter range of the first fine carbon particle 120A falls below the lower limit of the above range, there are problems in density, lifespan characteristics, and initial efficiency.

In one embodiment, the second fine carbon particle 120B may have an average particle diameter of 3 µm or less. Specifically, the second fine carbon particle 120B may have an average particle diameter of 1 to 3 µm, or 1.5 to 2.5 µm.

If the particle diameter range of the second fine carbon particle 120A exceeds the upper limit of the above range, there is a problem that rapid charging is difficult. If the particle diameter range of the second fine carbon particle 120A falls below the lower limit of the above range, there are problems in density, lifespan characteristics, and initial efficiency.

In this way, the negative electrode active material for a lithium secondary battery of the present invention includes the coarse carbon particles 110 and the fine carbon particles 120A, 120B simultaneously, and since the coarse carbon particles 100 and the fine carbon particles 120A, 120B satisfy the aforementioned ranges, there is an advantage of being excellent in rapid charging, density, lifespan, and initial efficiency of the battery.

In one embodiment, the average particle diameter (D₅₀) of the negative electrode active material may have an average particle diameter in the range of 8.0 to 20.0 µm. Specifically, the average particle diameter may be 10.0 to 16.0 µm, more specifically, the average particle diameter may be in the range of 12.5 to 16.0 µm, more specifically, 13.0 to 15.5 µm, and more specifically, 13.0 to 15.0 µm.

If the particle diameter of the negative electrode active material exceeds the upper limit of the above range, there is a problem that efficiency characteristics and output characteristics are degraded. If the particle diameter of the negative electrode active material falls below the lower limit of the above range, the effect of improving electrochemical characteristics by mixing granulated and fine carbon particles is not expressed, the specific surface area increases, the tap density decreases, and there may be a problem of an increase in the electrode expansion rate.

In one embodiment, the weight of the fine carbon particles (120 or 120A, 120B) based on the total amount of the coarse carbon particles 110 and the fine carbon particles (120 or 120A, 120B) may be in the range of 5 to 30% by weight. Specifically, the range may be 10 to 25% by weight, more specifically, 13 to 23% by weight, and more specifically, 15 to 19% by weight.

As the weight of the fine carbon particles (120 or 120A, 120B) satisfies the above range, there is an advantage that the specific surface area is wide and the orientation is excellent. If it exceeds the upper limit of the above range, there are problems of a decrease in tap density and an increase in the electrode expansion rate, and if it falls below the lower limit of the above range, there is a problem of a decrease in price competitiveness.

In one embodiment, a coating layer is included on the particle surface of each of the coarse carbon particles 110 and the fine carbon particles (120, 120A, or 120B), and the coating layer may have a thickness of 5 to 100 nm. Specifically, the coating layer may have a thickness of 20 to 80 nm.

If the coating layer exceeds the upper limit, there is a problem that the capacity decreases. If the coating layer falls below the lower limit, there is a problem that the charging speed decreases.

The coating layer is developed from a coating material, and may be prepared from a carbon precursor including, for example, sucrose, phenol resin, naphthalene resin, polyvinyl alcohol resin, furfuryl alcohol resin, polyacrylonitrile resin, polyamide resin, furan resin, cellulose resin, styrene resin, polyimide resin, epoxy resin, or vinyl chloride resin, coal-based pitch, petroleum-based pitch, polyvinyl chloride, mesophase pitch, tar, block-copolymer, low molecular weight heavy oil, or mixtures thereof.

In one embodiment, the negative electrode active material 100 may satisfy Equation 1 below. $0.45 \leq Tap Density \left(g/cc\right) / BET Specific Surface Area \left({m}^{2}/g\right) \leq 0.72$ (In Equation 1, the Tap Density and the BET Specific Surface Area mean the tap density and BET specific surface area of the negative electrode active material)

Equation 1 is a value obtained by dividing the value of the tap density of the negative electrode active material 100 by the specific surface area, and may be an index of energy density and electrochemical characteristics. Equation 1 may satisfy 0.45 to 0.72, specifically 0.55 to 0.70, more specifically 0.60 to 0.65, more specifically 0.61 to 0.63, and more specifically 0.61 to 0.62.

If Equation 1 exceeds the upper limit of the aforementioned range, there is a problem that rapid charging is difficult. If Equation 1 falls below the lower limit of the aforementioned range, there is a problem of being inferior in lifespan characteristics.

In one embodiment, the negative electrode active material may satisfy Equation 2 below. $9.50 \leq \left(I\left(004\right)/I\left(110\right)\right) / \left({D}_{90}-{D}_{10}\right) \leq 15.00$ (In Equation 2, I(004) and I(110) are the intensities of XRD peak values of the 004 plane and 110 plane, and D₁₀ and D₉₀ mean the particle sizes when particles are accumulated up to 10% and 90% by volume ratio, respectively, of negative electrode active material particles in which various particle sizes are distributed)

Equation 2 is a value obtained by dividing the orientation index of the negative electrode active material by the difference value between D₉₀ and D₁₀ of the negative electrode active material, and may be an index of charging characteristics and density. Equation 2 may be 9.50 or more, specifically 9.50 to 15.00, more specifically 9.50 to 12.5, more specifically 10.00 to 11.00, and more specifically 10.00 to 10.50.

As Equation 2 satisfies the aforementioned range, there is an advantage capable of implementing optimal rapid charging characteristics and energy density. If Equation 2 exceeds the upper limit of the aforementioned range, there is a problem of density reduction. If Equation 2 falls below the lower limit of the aforementioned range, there is a problem that rapid charging is difficult.

In one embodiment, the ratio (La/Lc) of the lateral size (La) to the vertical size (Lc) of the graphite crystallite of the negative electrode active material 100 may be 2.45 to 2.75. Specifically, the ratio may be 2.50 to 2.75, more specifically, 2.65 to 2.75.

In one embodiment, the lateral size (La) of the graphite crystallite of the negative electrode active material 100 may be 1940 nm or more. Specifically, the lateral size (La) of the graphite crystallite may be 1940 to 2000 nm, more specifically, 1940 to 1955 nm.

In one embodiment, the vertical size (Lc) of the graphite crystallite of the negative electrode active material 100 may be 690 to 725 nm. Specifically, the vertical size (Lc) of the graphite crystallite may be 700 to 720 nm, more specifically, 710 to 718 nm.

If the vertical size (Lc) of the graphite crystallite exceeds the upper limit of the aforementioned range, there is a problem in initial efficiency and capacity. If the vertical size (Lc) of the graphite crystallite falls below the lower limit of the aforementioned range, there is a problem that it is difficult to apply to rapid charging.

In one embodiment, the Span value of the negative electrode active material 100 may be 0.7 to 2.0. Specifically, the Span value may satisfy 1.0 to 1.3, more specifically, 1.150 to 1.270 or less.

The Span value means a value obtained using the equation of (D₉₀-D₁₀)/D₅₀ using D₁₀, D₅₀, and D₉₀, which are indices indicating the size of particles. Specifically, the D₁₀, D₅₀, and D₉₀ particle diameters mean the particle sizes when particles are accumulated up to 10%, 50%, and 90% by volume ratio, respectively, of active material particles in which various particle sizes are distributed.

If the Span value exceeds the upper limit of the above range, there is a problem that the non-uniformity of the particle size distribution of the negative electrode active material 100 increases. When the fine carbon particles (120 or 120A, 120B) are mixed and coated, the Span value is lowered compared to the coarse carbon particles 110, but if it falls below the lower limit of the above range, it is expected that more uniform electrochemical characteristic values can be obtained.

In one embodiment, the specific surface area (BET) of the negative electrode active material 100 may be 1.15 m²/g or more. Specifically, the specific surface area (BET) may be 1.2 m²/g or more, more specifically, 1.2 to 2.0 m²/g, and more specifically, 1.2 to 1.5 m²/g.

In one embodiment, the tap density of the negative electrode active material 100 may be 0.82 g/cc or less. Specifically, the tap density may be 0.80 g/cc or less, more specifically, 0.70 to 0.80 g/cc.

In one embodiment, the orientation (I₀₀₄/I₀₀₁) of the negative electrode active material 100 may be 1.85 or less. The orientation is an index indicating the degree of orientation of the hexagonal network plane with respect to the thickness direction of the electrode. The orientation can be determined using JCPDS (ASTM) data as an index, which is standard data by X-ray diffraction, and refers to the peak intensity ratio of the (004) plane and the (001) plane after XRD measurement of the (004) plane and the (001) plane of the negative electrode active material. The orientation (I₀₀₄/I₀₀₁) may be 1.85 or less, specifically 1.5 to 1.85, and more specifically 1.6 to 1.7.

If the orientation exceeds the upper limit of the above range, the electrode swelling phenomenon may become severe during battery charging. If the orientation falls below the lower limit of the above range, there are problems of increased swelling phenomenon and inferior charging characteristics.

In one embodiment, in the value obtained by measuring the voltage value according to SOC %, the point in time at which the inflection point appears in the negative electrode active material 100 may be SOC 30% or more. Specifically, the point in time at which the inflection point appears may be SOC 45%, more specifically, SOC 48%, more specifically, SOC 49%, and more specifically, SOC 50% or more. As the inflection point appears above the aforementioned range, there is an advantage that it can be utilized as a negative electrode active material for rapid charging. More specifically, in the case of the negative electrode active material 100 including the first fine carbon particle 120A and the second fine carbon particle 120B, the SOC may be 49% or more.

In one embodiment, the negative electrode active material 100 of the present invention may satisfy Equation 3 below. $0.65 \leq \left(\left[SOC 50%\right]-\left[SOC 20%\right]\right) / \left[SOC 20%\right] \leq 2.00$

(In Equation 3, [SOC 20%] and [SOC 50%] mean the average voltage values when the SOC is 20% and 50%, respectively)

Equation 3 is an index for a negative electrode active material for rapid charging. Equation 3 may satisfy 0.65 to 2.00, specifically 0.75 to 1.50, more specifically 0.80 to 1.5, and more specifically 0.80 to 1.00.

As Equation 3 satisfies the aforementioned range, the negative electrode active material can be utilized for rapid charging. If Equation 3 departs from the aforementioned range, there is a problem that the negative electrode active material cannot be utilized for rapid charging.

In one embodiment, a negative electrode for a lithium secondary battery including the negative electrode active material 100 may be provided. The negative electrode for a lithium secondary battery may include the negative electrode active material 100, a thickener, and a binder. The negative electrode active material 100 may refer to the aforementioned negative electrode active material 100 within a non-contradictory range.

The thickener is an additive for increasing the viscosity of the negative electrode material, and may include, for example, at least one of carboxymethyl cellulose (CMC), guar gum, uncrosslinked polyacrylic acid, non-crosslinked polyacrylic acid, and polyvinyl alcohol.

The binder serves to adhere the particles constituting the negative electrode material well to each other and facilitate adhesion of the negative electrode material to the current collector, and may include, for example, at least one of polyvinylidene fluoride (PVDF), ethylene-propylene-diene terpolymer, styrene butadiene rubber (SBR), acrylonitrile-butadiene rubber, fluororubber, polyvinyl acetate, polymethylmethacrylate, polyethylene, and nitrocellulose.

In one embodiment, a lithium secondary battery including the negative electrode active material 100 may be provided. In one embodiment, the lithium secondary battery may include a negative electrode including the negative electrode active material 100, a positive electrode including a positive electrode active material, and an electrolyte. Specifically, the lithium secondary battery may further include a separator disposed between the positive electrode and the negative electrode.

The negative electrode may be manufactured by mixing the negative electrode active material prepared according to an embodiment of the present invention, a binder, and optionally a conductive material to prepare a composition for forming a negative electrode active material layer, and then applying the composition to a negative electrode current collector. A copper foil may be used as the negative electrode current collector.

The binder may be polyvinyl alcohol, carboxymethyl cellulose/styrene-butadiene rubber, hydroxypropylene cellulose, diacetylene cellulose, polyvinyl chloride, polyvinylpyrrolidone, polytetrafluoroethylene, polyvinylidene fluoride, polyethylene, or polypropylene, but is not limited thereto.

The conductive material is not particularly limited as long as it has conductivity without causing chemical changes in the battery, and specifically, graphite such as natural graphite or artificial graphite; carbon black such as acetylene black, Ketjen black, channel black, furnace black, lamp black, or thermal black; conductive fibers such as carbon fibers or metal fibers; metal powders such as carbon fluoride, aluminum, or nickel powder; conductive whiskers such as zinc oxide or potassium titanate; conductive metal oxides such as titanium oxide; or conductive materials such as polyphenylene derivatives may be used. The conductive material may be mixed in an amount of 0.1 wt% to 30 wt% based on the total amount of the composition for forming the negative electrode active material layer.

The positive electrode may be manufactured by mixing a positive electrode active material, a binder, and optionally a conductive material to prepare a composition for forming a positive electrode active material layer, and then applying this composition to a positive electrode current collector. At this time, the binder and the conductive material are used in the same manner as in the case of the negative electrode described above.

The positive electrode is any one selected from the group consisting of LiCoO₂, LiNiO₂, LiNiₓMn_{γ}O₂, Li₁+₂NiₓMn_{γ}Co_{1-x-γ}O₂, LiNiₓCo_{γ}Al₂O₂, LiV₂O₅, LiTiS₂, LiMoS₂, LiMnO₂, LiCrO₂, LiMn₂O₄, LiFeO₂, LiFePO₄, and combinations thereof, wherein x is 0.3 to 0.8, y is 0.1 to 0.45, and z may be independently 0 to 0.2. The positive electrode may be more specifically LiFePO₄, LiCoO₂, NCM811, and NCM622.

As the positive electrode current collector, for example, stainless steel, aluminum, nickel, titanium, sintered carbon, or aluminum or stainless steel surface-treated with carbon, nickel, titanium, silver, etc., may be used. As the positive electrode active material, a compound capable of reversible intercalation and deintercalation of lithium may be used.

As the electrolyte filled in the lithium secondary battery, a non-aqueous electrolyte or a known solid electrolyte may be used, and one in which a lithium salt is dissolved may be used. The lithium salt may be, for example, at least one selected from the group consisting of LiPF₆, LiBF₄, LiSbF₆, LiAsF₆, LiClO₄, LiCF₃SO₃, Li(CF₃SO₂)₂N, LiC₄F₉SO₃, LiSbF₆, LiAlO₄, LiAlCl₄, LiCl, and LiI.

As the solvent of the non-aqueous electrolyte, for example, cyclic carbonates such as ethylene carbonate, propylene carbonate, butylene carbonate, and vinylene carbonate; chain carbonates such as dimethyl carbonate, methylethyl carbonate, and diethyl carbonate; esters such as methyl acetate, ethyl acetate, propyl acetate, methyl propionate, ethyl propionate, and γ-butyrolactone; ethers such as 1,2-dimethoxyethane, 1,2-diethoxyethane, tetrahydrofuran, 1,2-dioxane, and 2-methyltetrahydrofuran; nitriles such as acetonitrile; and amides such as dimethylformamide may be used, but are not limited thereto. These may be used alone or in combination of a plurality thereof. In particular, a mixed solvent of a cyclic carbonate and a chain carbonate can be preferably used.

As the electrolyte, a gel polymer electrolyte in which an electrolyte solution is impregnated in a polymer electrolyte such as polyethylene oxide or polyacrylonitrile, or an inorganic solid electrolyte such as LiI or Li₃N is possible. As the separator, a chemically resistant and hydrophobic olefin-based polymer such as polypropylene; a sheet or non-woven fabric made of glass fiber, polyethylene, etc. may be used. When a solid electrolyte such as a polymer is used as the electrolyte solution, the solid electrolyte may also serve as the separator.

FIG. 3 is a flowchart regarding a method for manufacturing a negative electrode active material according to an embodiment of the present invention.

Referring to FIG. 3, the method for manufacturing a negative electrode active material includes preparing at least one coarse carbon particle having an average particle diameter (D₅₀) of 8 to 15 µm and at least one fine carbon particle having an average particle diameter (D₅₀) of 7 µm or less (S100), granulating and carbonizing the coarse carbon particles and the fine carbon particles (S200), graphitizing the carbonized granulated product (S300), and coating the graphitized product (S400).

The coarse carbon particle and the fine carbon particle are carbon raw materials and may be raw materials for manufacturing a negative electrode active material. Specifically, the coarse carbon particle and the fine carbon particle may be the green coke described above in FIG. 1, and the detailed description thereof may refer to the green coke of FIG. 1 within a non-contradictory range.

The step (S100) of preparing at least one coarse carbon particle having an average particle diameter (D₅₀) of 8 to 15 µm and at least one fine carbon particle having an average particle diameter (D₅₀) of 7 µm or less prepares the coarse carbon particles and the fine carbon particles separately, respectively. At this time, the fine carbon particle may be the fine carbon particle 120 described above in FIG. 1, or may be the first fine carbon particle 120A and the second fine carbon particle 120B described above in FIG. 2.

The step (S200) of granulating and carbonizing the coarse carbon particles and the fine carbon particles may include mixing and granulating the coarse carbon particles and the fine carbon particles, and subsequently, may include carbonizing the granulated product. In the step of carbonizing the granulated product, secondary particles can be prepared by mixing 3 to 30 parts by weight of a coating material based on 100 parts by weight of the granulated product. Specifically, the content of the coating material may be 5 parts by weight or more, specifically 5 to 15 parts by weight, and more specifically 8 to 13 parts by weight. By mixing the coating material to prepare secondary particles, it can be utilized to make primary particles into secondary particles.

By granulating the coarse carbon particles and the fine carbon particles before graphitization, there is an advantage in that the process is shortened compared to carbonizing the coarse carbon particles and the fine carbon particles respectively, providing economic feasibility, reducing the content of the input coating material, and securing uniformity for the product.

The step (S300) of graphitizing the carbonized granulated product may be performed in a temperature range of 2,800 °C or higher, specifically 2,800 to 3,200 °C. Specifically, the granulated product may be graphitized in the aforementioned temperature range. If the graphitizing step departs from the above range, there are problems that electrochemical characteristics are inferior and thermal shock is given to the facility.

In one embodiment, the step (S300) of graphitizing the carbonized granulated product may be performed in a time range of 1 hour or more, specifically 2 hours or more.

In one embodiment, the step of coating the graphitized product may include mixing 1 to 10 parts by weight, specifically 1 to 5 parts by weight, of a coating material based on the graphitized product to the graphitized product to prepare a coated product. The step of coating the graphitized product is a step of coating the coating material in a state where the coarse carbon particles and the fine carbon particles are mixed. The coating material may form a Soft Carbon layer by undergoing the coating step.

In the step (S100) of mixing at least one coarse carbon particle and at least one fine carbon particle, the coarse carbon particle may be a particle having a larger diameter than the fine carbon particle. In one embodiment, the coarse carbon particle may have a particle diameter in the range of 8 to 15 µm. Specifically, the range may have a particle diameter in the range of 8 to 12 µm.

If it exceeds the upper limit of the above range, there is a problem that it is difficult to apply to rapid charging. If it falls below the lower limit of the above range, there are problems that capacity decreases and specific surface area increases.

In one embodiment, the fine carbon particle may have a particle diameter in the range of 7 µm or less. Specifically, the range may have a particle diameter in the range of 6 µm or less. In another embodiment, the fine carbon particles may include first fine carbon particles and second fine carbon particles. The first fine carbon particles may have an average particle diameter of 3 to 7 µm, specifically an average particle diameter of 4 to 6 µm. The second fine carbon particles may have an average particle diameter of 3 µm or less. Specifically, the second fine carbon particles may have an average particle diameter of 1 to 3 µm, or 1.5 to 2.5 µm. If it exceeds the upper limit of the above range, there is a problem that it is difficult to apply to rapid charging, and if it falls below the lower limit of the above range, there are problems that capacity decreases and specific surface area increases.

In one embodiment, in the step of granulating and carbonizing the at least one coarse carbon particle and the at least one fine carbon particle, a step of mixing the coarse carbon particles and the fine carbon particles is included, and based on the total amount of the coarse carbon particles and the fine carbon particles, the weight of the fine carbon particles may be mixed in a range of 5 to 30% by weight, specifically 10 to 25% by weight, more specifically 15 to 25% by weight, and more specifically 18 to 22% by weight.

If it exceeds the upper limit of the above range, there are problems that density decreases and specific surface area increases. If it falls below the lower limit of the above range, there is a problem that it is difficult to apply to rapid charging.

As such, since the coarse carbon particles and the fine carbon particles satisfy the particle diameters of the above ranges, and the weight of the fine carbon particles with respect to the total amount of the coarse carbon particles and the fine carbon particles satisfies the above range, a negative electrode active material having excellent orientation characteristics and excellent output characteristics can be manufactured.

In one embodiment, the coarse carbon particles and the fine carbon particles may be green coke. The green coke may be coal-based needle calcined coke, needle green coke, isotropic calcined coke, isotropic green coke, petroleum-based needle calcined coke, needle green coke, regular calcined coke, regular green coke, or a combination thereof, and the detailed description thereof is the same as described above in FIGS. 1 and 2.

In one embodiment, the step (S100) of mixing at least one coarse carbon particle and at least one fine carbon particle may include pulverizing and grinding the coarse carbon particles and the fine carbon particles. The pulverizing and grinding step may be performed by selecting any one method among ball milling, mechanofusion milling, shaker milling, planetary milling, attritor milling, disk milling, shape milling, nauta milling, nobilta milling, or a combination thereof. Through the pulverizing and grinding step, the coarse carbon particles and the fine carbon particles in the aforementioned ranges can be prepared.

The following examples are only one embodiment of the present invention, and the present invention is not limited to the following examples.

### <Experimental Example 1>: Coarse Carbon Particles and First Fine Carbon Particles

### <Example 1>

### 1. Method for Manufacturing Negative Electrode Active Material

### Preparation of Coarse Carbon Particles and Fine Carbon Particles

Green coke was used as a carbon raw material. Specifically, green coke was pulverized using a pulverizer to have average particle diameters of 9.5 µm and 5.4 µm, respectively. The pulverized particles can be classified into coarse carbon particles and fine carbon particles.

### Carbonization and Granulation of Coarse Carbon Particles and Fine Carbon Particles

Thereafter, the coarse carbon particles and fine carbon particles were mixed with 8 to 13 parts by weight of pitch having a softening point of 250 °C for 10 minutes using a mixer. Then, secondary particles were prepared through mixing and carbonization for 9 hours using a heatable mixing mixer. At this time, the coarse carbon particles and the fine carbon particles were mixed at a ratio of 80:20 to be granulated, and in the carbonization step, 8 parts by weight of pitch was additionally added based on 100 parts by weight of the coarse carbon particles and the fine carbon particles.

### Preparation of Graphitized Product

Thereafter, the temperature of the secondary particles of each of the coarse carbon particles and the fine carbon particles was raised to 3,000 °C, and a graphitization step was performed for 7 hours to prepare artificial graphite.

### Preparation of Coated Product

Thereafter, based on 100 parts by weight of the manufactured graphitized product, 3 parts by weight of pitch having a softening point of 250 °C was mixed, and then carbonized in an inert atmosphere at 1,200 °C for 2 hours to prepare an artificial graphite coated product, thereby manufacturing a negative electrode active material for a lithium secondary battery.

### 2. Method for Manufacturing Lithium Secondary Battery

A negative electrode active material slurry was prepared by mixing 95.6% by weight of the negative electrode active material prepared in Section 1 above, 3.4% by weight of a binder including carboxymethyl cellulose and styrene butadiene rubber, and 1.0% by weight of a Super P conductive material in a distilled water solvent. The negative electrode active material slurry was applied to a copper (Cu) current collector, dried at 100 °C for 10 minutes, and compressed in a roll press.

Thereafter, it was vacuum dried in a vacuum oven at 100 °C for 12 hours to manufacture a negative electrode. The electrode density of the negative electrode after vacuum drying was set to be 1.55 g/cc. Lithium metal (Li-metal) was used as a counter electrode, and as an electrolyte, a solution in which 1 mol of LiPF₆ solution was dissolved in a mixed solvent having a volume ratio of Ethylene Carbonate (EC) : Dimethyl Carbonate (DMC) of 2 : 8 was used. Using each of the above components, a 2032 coin cell type half coin cell was manufactured according to a conventional manufacturing method.

### <Example 2>

Example 2 was performed in the same manner as Example 1, except that the content of pitch in the carbonization and granulation step was changed to 13 parts by weight.

### <Comparative Example 1>

Comparative Example 1 was performed in the same manner as Example 1, except that fine carbon particles were not mixed with coarse carbon particles.

### <Properties of Primary Particles as Raw Materials>

Table 1 below shows the particle size and tap density of the coarse carbon particles and fine carbon particles, which are raw materials (primary particles). The particle size and tap density in Table 1 below were measured by the following measurement methods.

**Particle Size (µm):** D₁, D₁₀, D₅₀, D₉₀, and Dmax were measured for particle diameters corresponding to 1%, 10%, 50%, 90%, and the maximum value of the volume cumulative amount of the negative electrode active material measured using a Laser Diffraction Method, respectively. In addition, Span means a value calculated by (D₉₀-D₁₀)/D₅₀, and may be an index indicating the uniformity of particles.

**Tap Density (g/cc):** The tap density measurement method was based on ASTM-B527, and the packing density was measured by putting 15 g of powder in a 50 mL container and tapping it for 3000 cycles.

**[Table 1]**

| | Primary Particle Size, µm | | | | | | | Tap Density |
|---|---|---|---|---|---|---|---|---|
| | -5µm(%) | D1 | D10 | D50 | D90 | DMax | Span | g/cc |
| Coarse Carbon Particles | 13.9 | 1.6 | 4.4 | 9.5 | 16.2 | 25 | 1.2 | 0.56 |
| Fine Carbon Particles | 46.1 | 0.4 | 1.8 | 5.4 | 11.2 | 20 | 1.7 | 0.43 |

Referring to Table 1, it was confirmed that the average particle size (D₅₀) of the coarse carbon particles was about 9.5 µm, and the average particle size (D₅₀) of the fine carbon particles was about 5.4 µm.

### <Characteristics of Graphitized Product>

Tables 2 and 3 below show the particle size, physical properties, XRD characteristics, and electrochemical properties of the graphitized product obtained after granulating the coarse carbon particles and fine carbon particles of Table 1 and graphitizing them at 3,000 °C. The particle size and physical properties of the graphitized product in Table 2 and the XRD characteristics and electrochemical properties in Table 3 are measured by the following methods.

Specific Surface Area: The specific surface area was measured using the BET method (Surface area and Porosity analyzer) (Micromeritics, ASAP2020).

XRD Measurement Method: Using Bruker's XRD equipment, the XRD peak intensity values of the 004 plane and the 110 plane of the negative electrode active material were measured, and then the peak intensity value of the 110 plane was divided by the peak intensity value of the 004 plane.
- Target: Cu (Ka-line) graphite monochromator
- Slit: Divergence slit = 1 degree, Receiving slit = 0.1 mm, Scattering slit = 1 degree The 2Θ means the diffraction angle, and the XRD measurement is a non-limiting example, and other measurement methods may be used.
d₀₀₂: It is the distance at which carbon hexagonal network planes are stacked, measured by XRD diffraction analysis.

Le, La: The Lc value means the vertical size of the graphite crystallite, and the La value means the lateral size of the graphite crystallite.

Capacity (mAh/g) and Efficiency (%) Evaluation: After manufacturing a lithium secondary battery half cell, a charge/discharge test was performed after aging at 25 °C for 30 hours. For initial capacity evaluation, charging was performed at a constant current of 0.1 C to 0.01 V with 350 mAh/g as a reference capacity, and then switched to constant voltage, and charging was performed until the termination current reached 0.005 C. After charging, having a rest time of 10 minutes, discharging was performed until reaching 1.5 V at a constant current of 0.1 C with 350 mAh/g as a reference capacity.

**Graphitization Degree (%):** The graphitization degree refers to the degree to which a carbon material is converted from a non-graphitic carbon state to a state similar to graphitic carbon during a high temperature or secondary heating process. The graphitization degree of the carbon material can be obtained by the following method. Calculate the graphitization degree Gr of the carbon material according to the formula. $Gr = \left(0.344-{d}_{002}\right) / 0.086 \times 100 %$

**[Table 2]**

| | Pitch Content | Particle Size | | | | | | | Physical Properties | |
|---|---|---|---|---|---|---|---|---|---|---|
| | [Parts by weight] | -5 µm(%) | D1 | D10 | D50 | D90 | Dmax | Span | Tap Density [g/cc] | Specific Surface Area [m²/g] |
| Comparative Example 1 | - | 0.9 | 5.1 | 8.0 | 13.9 | 24.1 | 62.2 | 1.2 | 0.96 | 1.8 |
| Example 1 | 8 | 8.2 | 2.1 | 5.4 | 12.2 | 21.3 | 36.0 | 1.3 | 0.91 | 1.9 |
| Example 2 | 13 | 1.1 | 5.0 | 7.8 | 14.5 | 28.0 | 74.0 | 1.4 | 0.89 | 1.5 |

**[Table 3]**

| | XRD Characteristics | | | | | | Electrochemical Characteristics | |
|---|---|---|---|---|---|---|---|---|
| | D002 (nm) | Lc (nm) | La (nm) | Orientation (I₀₀₄/I₁₁₀) | Graphitization Degree (%) | La/ Lc | Initial Efficiency (%) | Capacity (mAh/g) |
| Comparative | 3.361 | 742 | 1892 | 2.4 | 92 | 2.6 | 94 | 348.1 |
| Example 1 | | | | | | | | |
| Example 1 | 3.362 | 692 | 1749 | 2.6 | 91 | 2.5 | 94 | 347.3 |
| Example 2 | 3.361 | 718 | 1854 | 2.3 | 92 | 2.6 | 93 | 348.3 |

Referring to Tables 2 and 3, it can be confirmed that although fine particles were included, characteristics such as graphitization degree, capacity, and efficiency in the graphitized product have similar levels. Specifically, as Examples 1 and 2 have differences in orientation, particle size, physical properties, and orientation compared to Comparative Example 1, it was confirmed that the values of Equation 1 and Equation 2 are included in the scope of the present invention.

### <Characteristics of Coated Product>

Table 4 below shows the particle size, physical properties, XRD characteristics, and electrochemical properties of Comparative Example 1, Example 1, and Example 2 obtained by coating the graphitized products of Table 2.

**[Table 4]**

| | Particle Size | | | | | | | Physical Properties | | XRD | Electrochemical Characteristics | | Equation 1 | Equation 2 |
|---|---|---|---|---|---|---|---|---|---|---|---|---|---|---|
| | -5 µm (%) | D1 | D10 | D50 | D90 | Dmax | Span | Tap Density (g/cc) | Specific Surface Area (m²/g) | Orientation (I₀₀₄/I₁₁₀) | Initial Efficiency (%) | Capacity (mAh/ g) | | |
| Comparative Ex | 0.1 | 6.3 | 9.8 | 16.7 | 30.3 | 74.0 | 1.2 | 0.84 | 1.1 | 1.9 | 93 | 350.2 | 0.76 | 9.27 |
| am ple 1 | | | | | | | | | | | | | | |
| Example 1 | 2.3 | 4.3 | 7.1 | 13.0 | 22.9 | 52.3 | 1.2 | 0.79 | 1.3 | 1.6 | 92 | 342.5 | 0.61 | 10.13 |
| Example 2 | 0.1 | 6.1 | 9.1 | 15.2 | 26.0 | 62.2 | 1.1 | 0.76 | 1.2 | 1.7 | 91 | 346.6 | 0.63 | 10.06 |
| Equation 1: Tap Density / Specific Surface Area | | | | | | | | | | | | | | |
| Equation 2: Orientation (I₀₀₄/I₁₁₀) / (D₉₀ - D₁₀) | | | | | | | | | | | | | | |

Referring to Table 4, in the case of the Comparative Example, it was confirmed that the tap density, specific surface area, and orientation deviate from the scope of the present invention. In addition, in Equations 1 and 2 of the present invention, it was confirmed that Examples 1 and 2 are included in the scope of the present invention, but Comparative Example 1 is not included.

### <Evaluation of Rapid Charging Performance>

Table 5 below shows the average voltage values at SOC 10 to 60% of Comparative Example 1 and Examples 1 and 2.

**SOC (State of Charge) (%):** The experiment was performed by applying the negative electrode active materials of Examples 1 and 2 and Comparative Example 1 to a half cell. Specifically, when the battery was charged and discharged for 3 cycles at 3.0 V to 4.5 V, and the total charge capacity of the battery was set to 100%, charging was performed such that the charge capacity value SOC (State of Charge) became a charge capacity of 10 to 60%, and then the average voltage value was measured using ETH-HC0105R equipment.

**[Table 5]**

| | SOC [%] | Average Voltage Value [V] | Timing when inflection point appears [%] | Equation 3 |
|---|---|---|---|---|
| Comparative Example 1 | 10 | -0.04494 | 43 | 0.63 |
| | 20 | -0.10363 | | |
| | 30 | -0.14143 | | |
| | 40 | -0.16646 | | |
| | 50 | -0.16906 | | |
| | 60 | -0.1716 | | |
| Example 1 | 10 | -0.03239 | 51 | 0.84 |
| | 20 | -0.0911 | | |
| | 30 | -0.12207 | | |
| | 40 | -0.15054 | | |
| | 50 | -0.16793 | | |
| | 60 | -0.17516 | | |
| Example 2 | 10 | -0.04271 | 49 | 0.97 |
| | 20 | -0.10009 | | |
| | 30 | -0.13813 | | |
| | 40 | -0.17437 | | |
| | 50 | -0.19763 | | |
| | 60 | -0.204 | | |
| Equation 4: (SOC 50%-SOC 20%)/SOC 20% | | | | |

Referring to Table 5, in the case of the Comparative Example, in the voltage value according to SOC %, it was confirmed that the point in time when the inflection point appears is 43%, which appears at a lower point than Example 1 at 51% and Example 2 at 49%. In the voltage change graph according to the increase in SOC %, the larger the SOC value at the time the inflection point appears, the more advantageous it is for rapid charging. Thus, it can be confirmed that the Examples are advantageous for rapid charging compared to Comparative Example 1, and it was confirmed that Example 1 is advantageous for rapid charging compared to Example 2.

Accordingly, it can be confirmed that the negative electrode active material of the present invention has excellent output characteristics.

FIGS. 3a to 3c are texture photographs of negative electrode active materials for a lithium secondary battery according to Examples of the present invention and a Comparative Example.

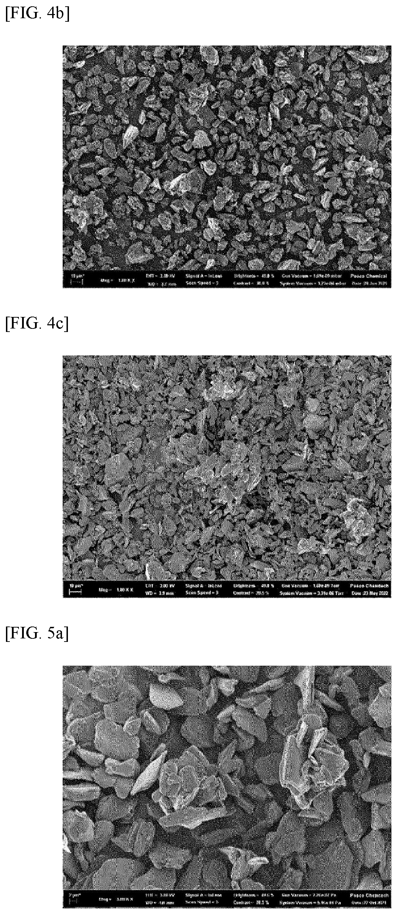

FIGS. 4a to 4c are 1,000x magnification texture photographs of the negative electrode active materials of Comparative Example 1, Example 1, and Example 2, respectively.

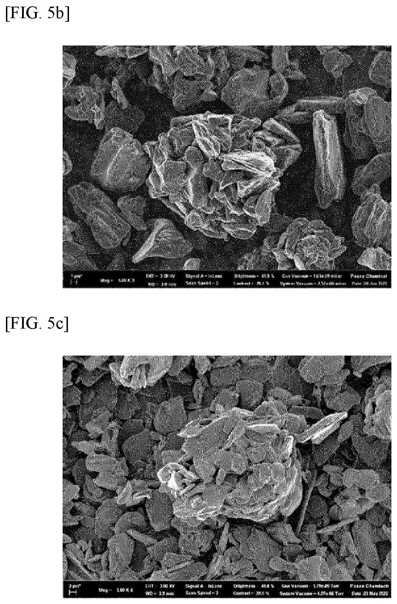

FIGS. 5a to 5c are 5,000x magnification texture photographs of the negative electrode active materials for a lithium secondary battery according to Examples of the present invention and a Comparative Example.

Referring to FIGS. 4a to 4c and FIGS. 5a to 5c, fine particles and the degree of particle granulation can be confirmed.

### <Experimental Example 2>: Mixing of Coarse Carbon Particles, First Fine Carbon Particles, and Second Fine Carbon Particles

### <Example 3>

### 1. Method for Manufacturing Negative Electrode Active Material

### Preparation of Coarse Carbon Particles and Fine Carbon Particles

Green coke was used as a carbon raw material. Specifically, green coke was pulverized using a pulverizer to have average particle diameters of 9.5 µm, 5.4 µm, and 2.0 µm, respectively. The pulverized particles can be classified into coarse carbon particles, first fine carbon particles, and second fine carbon particles.

### Carbonization and Granulation of Coarse Carbon Particles and Fine Carbon Particles

Thereafter, the coarse carbon particles and the first and second fine carbon particles were mixed with 15.5 parts by weight of pitch having a softening point of 250 °C for 10 minutes using a mixer. Then, secondary particles were prepared through mixing and carbonization for 9 hours using a heatable mixing mixer. At this time, the coarse carbon particles and the first and second fine carbon particles were mixed at a ratio of 70:17.5:12.5 and granulated.

### Preparation of Graphitized Product

Thereafter, the secondary particles of each of the coarse carbon particles and the first and second fine carbon particles were heated to 3,000 °C, and a graphitization step was performed for 7 hours to prepare artificial graphite.

### Preparation of Coated Product

Thereafter, based on 100 parts by weight of the manufactured graphitized product, 3 parts by weight of pitch having a softening point of 250 °C was mixed, and then carbonized in an inert atmosphere at 1,200 °C for 2 hours to prepare an artificial graphite coated product, thereby manufacturing a negative electrode active material for a lithium secondary battery.

### 2. Method for Manufacturing Lithium Secondary Battery

A negative electrode active material slurry was prepared by mixing 95.6% by weight of the negative electrode active material prepared in Section 1 above, 3.4% by weight of a binder including carboxymethyl cellulose and styrene butadiene rubber, and 1.0% by weight of a Super P conductive material in a distilled water solvent. The negative electrode active material slurry was applied to a copper (Cu) current collector, dried at 100 °C for 10 minutes, and compressed in a roll press.

Thereafter, it was vacuum dried in a vacuum oven at 100 °C for 12 hours to manufacture a negative electrode. The electrode density of the negative electrode after vacuum drying was set to be 1.55 g/cc. Lithium metal (Li-metal) was used as a counter electrode, and as an electrolyte, a solution in which 1 mol of LiPF₆ solution was dissolved in a mixed solvent having a volume ratio of Ethylene Carbonate (EC) : Dimethyl Carbonate (DMC) of 2 : 8 was used.

Using each of the above components, a 2032 coin cell type half coin cell was manufactured according to a conventional manufacturing method.

### <Comparative Example 2>

Comparative Example 2 was performed in the same manner as Example 3, except that the first fine carbon particles and the second fine carbon particles were not included, and the content of pitch during carbonization was proposed as 8 parts by weight.

### <Comparative Example 3>

Comparative Example 3 was performed in the same manner as Example 3, except that coarse carbon particles : first fine carbon particles were mixed at 80:20, and the content of pitch during carbonization was changed to 15.5 parts by weight.

### <Properties of Primary Particles as Raw Materials>

Table 6 below shows the particle size and tap density of the coarse carbon particles and fine carbon particles, which are raw materials (primary particles). The particle size and tap density in Table 6 below were measured in the same manner as in Experimental Example 1 described above.

**[Table 6]**

| | Primary Particle Size, µm | | | | | | | Tap Density |
|---|---|---|---|---|---|---|---|---|
| | -5µm(%) | D1 | D10 | D50 | D90 | DMax | Span | g/cc |
| Coarse Carbon Particles | 13.9 | 1.6 | 4.4 | 9.5 | 16.2 | 25 | 1.2 | 0.56 |
| First Fine Carbon Particles | 46.1 | 0.4 | 1.8 | 5.4 | 11.2 | 20 | 1.7 | 0.43 |
| Second Fine Carbon Particles | 91.1 | 0.0 | 0.8 | 2.3 | 4.9 | 8.0 | 1.8 | 0.25 |

Referring to Table 6, it was confirmed that the average particle size (D₅₀) of the coarse carbon particles was about 9.5 µm, the average particle size (D₅₀) of the first fine carbon particles was about 5.4 µm, and the average particle size (D₅₀) of the second fine carbon particles was about 2.3 µm.

### <Characteristics of Graphitized Product>

Tables 7 and 8 below show the particle size, physical properties, XRD characteristics, and electrochemical properties of the graphitized product obtained after granulating the coarse carbon particles and the first and second fine carbon particles of Table 6 and graphitizing them at 3,000 °C. The particle size and physical properties of the graphitized product in Table 7 and the XRD characteristics and electrochemical properties in Table 8 were measured in the same manner as in Experimental Example 1 described above.

**Specific Surface Area:** The specific surface area was measured using the BET method (Surface area and Porosity analyzer) (Micromeritics, ASAP2020).

**XRD Measurement Method:** Using Bruker's XRD equipment, the XRD peak intensity values of the 004 plane and the 110 plane of the negative electrode active material were measured, and then the peak intensity value of the 110 plane was divided by the peak intensity value of the 004 plane.
- Target: Cu (Ka-line) graphite monochromator
- Slit: Divergence slit = 1 degree, Receiving slit = 0.1 mm, Scattering slit = 1 degree The 2Θ means the diffraction angle, and the XRD measurement is a non-limiting example, and other measurement methods may be used.
d₀₀₂: It is the distance at which carbon hexagonal network planes are stacked, measured by XRD diffraction analysis.

Lc, La: The Lc value means the vertical size of the graphite crystallite, and the La value means the lateral size of the graphite crystallite.

Capacity (mAh/g) **and** Efficiency (%) **Evaluation:** After manufacturing a lithium secondary battery half cell, a charge/discharge test was performed after aging at 25 °C for 30 hours. For initial capacity evaluation, charging was performed at a constant current of 0.1 C to 0.01 V with 350 mAh/g as a reference capacity, and then switched to constant voltage, and charging was performed until the termination current reached 0.005 C. After charging, having a rest time of 10 minutes, discharging was performed until reaching 1.5 V at a constant current of 0.1 C with 350 mAh/g as a reference capacity.

**Graphitization** Degree (%): The graphitization degree refers to the degree to which a carbon material is converted from a non-graphitic carbon state to a state similar to graphitic carbon during a high temperature or secondary heating process. The graphitization degree of the carbon material can be obtained by the following method. Calculate the graphitization degree Gr of the carbon material according to the formula. $Gr = \left(0.344-{d}_{002}\right) / 0.086 \times 100 %$

**[Table 7]**

| | Particle Size | | | | | | | Physical Properties | |
|---|---|---|---|---|---|---|---|---|---|
| | -5 µm(%) | D1 | D10 | D50 | D90 | Dmax | Span | Tap Density [g/cc] | Specific Surface Area [m²/g] |
| Comparative Example 2 | 0.9 | 5.1 | 8.0 | 13.9 | 24.1 | 62.2 | 1.2 | 0.96 | 1.8 |
| Comparative Example 3 | 1.1 | 5.0 | 7.8 | 14.5 | 28.0 | 74.0 | 1.4 | 0.89 | 1.5 |
| Example 3 | 1.0 | 5.0 | 7.9 | 14.6 | 27.5 | 74.0 | 1.3 | 0.88 | 1.7 |

**[Table 8]**

| | XRD Characteristics | | | | | | Electrochemical Characteristics | |
|---|---|---|---|---|---|---|---|---|
| | D002 (nm) | Lc (nm) | La (nm) | Orientation (I₀₀₄/I₁₁₀) | Graphitization Degree (%) | La/Lc | Initial Efficiency (%) | Capacity (mAh/g) |
| Comparative Example 2 | 3.361 | 742 | 1892 | 2.4 | 92 | 2.6 | 94 | 348.1 |
| Comparative Example 3 | 3.361 | 718 | 1854 | 2.3 | 92 | 2.6 | 93 | 348.3 |
| Example 3 | 3.160 | 428 | 1218 | 1.7 | 92 | 2.8 | 92 | 343.9 |

Referring to Tables 7 and 8, in Example 3, Comparative Example 2, and Comparative Example 3, it can be confirmed that the Example has superior effects to the Comparative Examples according to the orientation.

### <Characteristics of Coated Product>

Tables 9 and 10 below show the particle size, physical properties, XRD characteristics, and electrochemical properties of Comparative Example 2, Comparative Example 3, and Example 3 obtained by coating the graphitized products of Table 7 with a coating material.

**[Table 9]**

| | Particle Size | | | | | | | Physical Properties | |
|---|---|---|---|---|---|---|---|---|---|
| | -5 µm(%) | D1 | D10 | D50 | D90 | Dmax | Span | Tap Density (g/cc) | Specific Surface Area (m²/g) |
| Comparative Example 2 | 0.1 | 6.3 | 9.8 | 16.7 | 30.3 | 74.0 | 1.2 | 0.84 | 1.1 |
| Comparative Example 3 | 0.1 | 6.1 | 9.1 | 15.2 | 26.0 | 62.2 | 1.1 | 0.76 | 1.2 |
| Example 3 | 0.6 | 5.4 | 8.4 | 15.3 | 26.7 | 62.2 | 1.2 | 0.76 | 1.4 |

**[Table 10]**

| | XRD Characteristics | | | | | | Electrochemical Characteristics | |
|---|---|---|---|---|---|---|---|---|
| | D002 (nm) | Lc (nm) | La (nm) | Orientation (I₀₀₄/I₁₁₀) | Graphitization n Degree (%) | La/Lc | Initial Efficiency (%) | Capacity (mAh/g) |
| Comparative Example 2 | 3.361 | 688 | 1939 | 1.9 | 92 | 2.8 | 93 | 350.2 |
| Com | 3.361 | 727 | 1682 | 1.7 | 92 | 2.3 | 91 | 346.6 |
| parative Example 3 | | | | | | | | |
| Example 3 | 3.361 | 715 | 1948 | 1.7 | 91 | 2.7 | 90 | 343.8 |

### <Evaluation of Rapid Charging Performance>

Table 11 below shows the average voltage values at SOC 10 to 60% of Comparative Example 2, Comparative Example 3, and Example 3.

**SOC (State of Charge) (%):** The experiment was performed by applying the negative electrode active materials of Comparative Example 2, Comparative Example 3, and Example 3 to a half cell. Specifically, when the battery was charged and discharged for 3 cycles at 3.0 V to 4.5 V, and the total charge capacity of the battery was set to 100%, charging was performed such that the charge capacity value SOC (State of Charge) became a charge capacity of 10 to 60%, and then the average voltage value was measured using ETH-HC0105R equipment.

**[Table 11]**

| | SOC [%] | Average Voltage Value [V] | Timing when inflection point appears [%] | Equation 3 |
|---|---|---|---|---|
| Comparative Example 2 | 10 | -0.04494 | 43 | 0.63 |
| | 20 | -0.10363 | | |
| | 30 | -0.14143 | | |
| | 40 | -0.16646 | | |
| | 50 | -0.16906 | | |
| | 60 | -0.1716 | | |
| Comparative Example 3 | 10 | -0.04271 | 48 | 0.97 |
| | 20 | -0.10009 | | |
| | 30 | -0.13813 | | |
| | 40 | -0.17437 | | |
| | 50 | -0.19763 | | |
| | 60 | -0.204 | | |
| Example 3 | 10 | -0.03725 | 50 | 1.02 |
| | 20 | -0.09138 | | |
| | 30 | -0.12663 | | |
| | 40 | -0.16472 | | |
| | 50 | -0.18463 | | |
| | 60 | -0.18911 | | |
| Equation 3: (SOC 50%-SOC 20%)/SOC 20% | | | | |

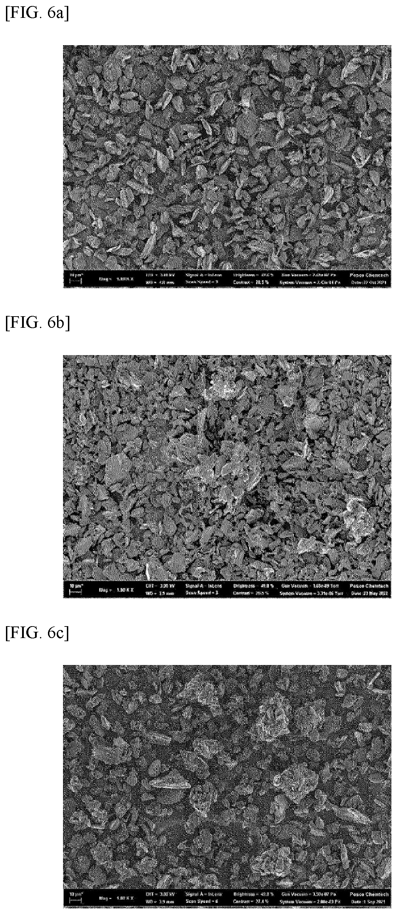

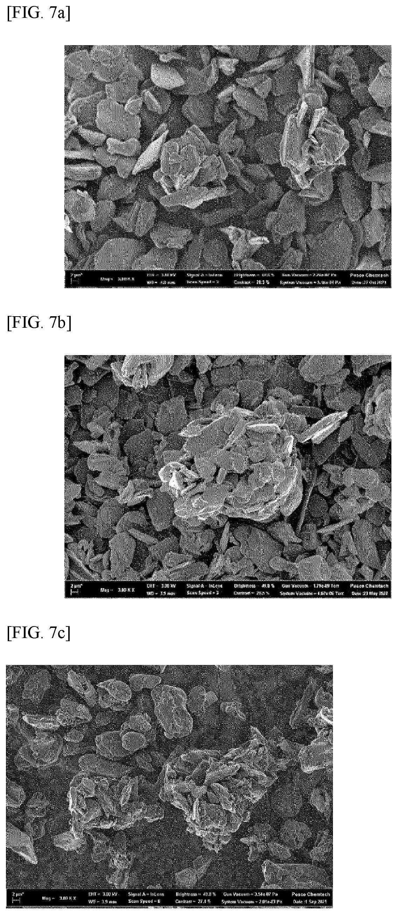

Referring to Table 11, in the case of Comparative Example 2 and Comparative Example 3, in the voltage value according to SOC %, it was confirmed that the points in time when the inflection point appears are 43% and 48%, which are different compared to Example 3 at 50%. In the voltage change graph according to the increase in SOC %, the larger the SOC value at the time the inflection point appears, the more advantageous it is for rapid charging. Thus, it can be confirmed that Example 3 is advantageous for rapid charging compared to Comparative Examples 2 and 3. Accordingly, it can be confirmed that the negative electrode active material of the present invention has excellent output characteristics. FIGS. 6a to 7c are texture photographs of negative electrode active materials for a lithium secondary battery according to Examples of the present invention and Comparative Examples. FIGS. 6a to 6c are 1,000x magnification texture photographs of the negative electrode active materials of Comparative Example 2, Comparative Example 3, and Example 3, respectively. FIGS. 7a to 7c are 5,000x magnification texture photographs of the negative electrode active materials for a lithium secondary battery according to Comparative Example 2, Comparative Example 3, and Example 3 of the present invention.

Referring to FIGS. 6a to 6c and FIGS. 7a to 7c, fine particles and the degree of particle granulation can be confirmed.

The present invention is not limited to the above-described examples, but can be manufactured in various different forms, and those of ordinary skill in the art to which the present invention pertains will understand that the present invention can be implemented in other specific forms without changing the technical spirit or essential features of the present invention. Therefore, it should be understood that the examples described above are illustrative in all respects and not restrictive.

## Claims

1. A negative electrode active material for a lithium secondary battery, comprising coarse carbon particles and fine carbon particles, and satisfying Equation 1 below: <Equation 1> 0.45 ≤ Tap Density (g/cc) / BET Specific Surface Area (m²/g) ≤ 0.72 (In Equation 1, the Tap Density and the BET Specific Surface Area mean the tap density and BET specific surface area of the negative electrode active material).

2. The negative electrode active material for a lithium secondary battery of claim 1, wherein the negative electrode active material satisfies Equation 2 below: $9.50 \leq \left(I\left(004\right)/I\left(110\right)\right) / \left({D}_{90}-{D}_{10}\right) \leq 15.00$ (In Equation 2, I(004) and I(110) are intensities of XRD peak values of a 004 plane and a 110 plane, and D₁₀ and D₉₀ mean particle sizes when particles are accumulated up to 10% and 90% by volume ratio, respectively, of negative electrode active material particles in which various particle sizes are distributed).

3. The negative electrode active material for a lithium secondary battery of claim 1, wherein a weight of the fine carbon particles based on a total amount of the coarse carbon particles and the fine carbon particles is 5 to 30% by weight.

4. The negative electrode active material for a lithium secondary battery of claim 1, wherein in a value obtained by measuring a voltage value according to SOC %, a point in time at which an inflection point appears is SOC 30% or more.

5. The negative electrode active material for a lithium secondary battery of claim 1, wherein the negative electrode active material satisfies Equation 3 below: $0.65 \leq \left(\left[SOC 50%\right]-\left[SOC 20%\right]\right) / \left[SOC 20%\right] \leq 2.00$ (In Equation 3, [SOC 20%] and [SOC 50%] mean average voltage values when SOC is 20% and 50%, respectively).

6. The negative electrode active material for a lithium secondary battery of claim 1, wherein the coarse carbon particles and the fine carbon particles are artificial graphite, natural graphite, or a combination thereof.

7. The negative electrode active material for a lithium secondary battery of claim 1, wherein an average particle diameter (D₅₀) is 8.0 to 20.0 µm.

8. The negative electrode active material for a lithium secondary battery of claim 1, wherein a specific surface area (BET) is 1.15 m²/g or more.

9. The negative electrode active material for a lithium secondary battery of claim 1, wherein a tap density is 0.82 g/cc or less.

10. The negative electrode active material for a lithium secondary battery of claim 1, wherein an orientation (I₀₀₄/I₀₀₁) is 1.85 or less. (The I₀₀₄ and I₀₀₁ mean a peak intensity ratio of a (004) plane and a (001) plane, respectively).

11. The negative electrode active material for a lithium secondary battery of claim 1, wherein the fine carbon particles comprise first fine carbon particles and second fine carbon particles, and the first fine carbon particles have a larger average particle diameter (D₅₀) than the second fine carbon particles.

12. The negative electrode active material for a lithium secondary battery of claim 11, wherein an average particle diameter (D₅₀) of the first fine carbon particles is 3 to 7 µm.

13. The negative electrode active material for a lithium secondary battery of claim 11, wherein an average particle diameter (D₅₀) of the second fine carbon particles is 3 µm or less.

14. A lithium secondary battery comprising: a negative electrode for a lithium secondary battery comprising 96 to 99 wt% of the negative electrode active material of any one of claims 1 to 13, 0.5 to 1.5 wt% of a thickener, and a balance of a binder; a positive electrode comprising a positive electrode active material; and an electrolyte.

15. A method for manufacturing a negative electrode active material for a lithium secondary battery, comprising:
preparing at least one coarse carbon particle having an average particle diameter (D₅₀) of 8 to 15 µm and at least one fine carbon particle having an average particle diameter (D₅₀) of 7 µm or less;
granulating and carbonizing the coarse carbon particles and the fine carbon particles;
graphitizing the carbonized granulated product; and
coating the graphitized product,
wherein the step of granulating and carbonizing the coarse carbon particles and the fine carbon particles comprises mixing the fine carbon particles in an amount of 5 to 30% by weight based on a total amount of the coarse carbon particles and the fine carbon particles.

16. The method for manufacturing a negative electrode active material for a lithium secondary battery of claim 15, wherein in the step of granulating and carbonizing the coarse carbon particles and the fine carbon particles, a content of a coating material is 3 to 30 parts by weight mixed based on 100 parts by weight of a total amount of the coarse carbon particles and the fine carbon particles.

17. The method for manufacturing a negative electrode active material for a lithium secondary battery of claim 15, wherein the coarse carbon particles and the fine carbon particles are coal-based needle calcined coke, needle green coke, isotropic calcined coke, isotropic green coke, petroleum-based needle calcined coke, needle green coke, regular calcined coke, regular green coke, or a combination thereof.

18. The method for manufacturing a negative electrode active material for a lithium secondary battery of claim 15, wherein in the step of preparing at least one coarse carbon particle having an average particle diameter (D₅₀) of 8 to 15 µm and at least one fine carbon particle having an average particle diameter (D₅₀) of 7 µm or less, the step comprises pulverizing the coarse carbon particles to have a particle diameter of 8 to 15 µm.

19. The method for manufacturing a negative electrode active material for a lithium secondary battery of claim 15, wherein the step of coating the graphitized product comprises mixing a coating material in an amount of 1 to 5 parts by weight based on the graphitized product.

20. The method for manufacturing a negative electrode active material for a lithium secondary battery of claim 15, wherein in the step of preparing at least one coarse carbon particle having an average particle diameter (D₅₀) of 8 to 15 µm and at least one fine carbon particle having an average particle diameter (D₅₀) of 7 µm or less, the fine carbon particles comprise at least one first fine carbon particle having an average particle diameter (D₅₀) of 4 to 7 µm, and at least one second fine carbon particle having an average particle diameter (D₅₀) of 3 µm or less.
